# EUROPEAN PATENT APPLICATION

(11) **EP 4 443 623 A1**
(43) Date of publication of application: **09.10.2024**
(21) Application number: 24159254.2
(22) Date of filing: 22.02.2024
(51) Int. Cl.: H01M 50/213, H01M 50/244, H01M 50/342, H01M 50/367, H01M 50/383

(54) **RECHARGEABLE BATTERY MODULE**

(30) Priority: 03.04.2023 KR 20230043702
(71) Applicant: Samsung SDI Co., Ltd., Yongin-si, Gyeonggi-do 17084 (KR)
(72) Inventor: JEONG, Areum, 17084 Yongin-si (KR); LEE, Choonghoon, 17084 Yongin-si (KR)
(74) Representative: Marks & Clerk LLP

(57) **Abstract**

A rechargeable battery module is disclosed. A rechargeable battery module includes: a plurality of battery cells provided with a vent hole; a first holder that supports the battery cells by accommodating one of the sides of the battery cells; a second holder that supports the battery cells by accommodating the other of the sides of the battery cells and is coupled to the first holder; a first plate that is provided at one side of the second holder and includes an outlet formed at a position corresponding to a vent hole of each of the battery cells, and a hooking piece protrudes in a diameter direction of the outlet from an inner wall surface of the outlet; and a second plate that is provided at one side of the first plate to block an explosion pressure, flames, and debris discharged through the vent hole and the outlet.

## Description

### BACKGROUND OF THE INVENTION

### (a) Field of the Invention

The present disclosure relates to a rechargeable battery module that prevents chain explosions of neighboring battery cells when a battery cell explodes.

### (b) Description of the Related Art

Unlike a primary battery, a rechargeable battery is a battery that iteratively performs charging and discharging. Small-capacity rechargeable batteries are used for portable small electronic devices such as mobile phones or laptop computers and camcorders. Large-capacity and high-density rechargeable batteries are used for motor driving power or energy storage for hybrid vehicles and electric vehicles.

The rechargeable battery includes an electrode assembly that charges and discharges a current, a case that accommodates the electrode assembly and an electrolyte solution, and an electrode terminal that is connected to the electrode assembly and drawn out to the outside of the case. The electrode assembly may be formed in a jelly roll type formed by winding an electrode and a separator.

An electric vehicle and an energy storage device require large-capacity rechargeable battery modules. The large-capacity rechargeable battery module is provided with a plurality of battery cells. When fire or explosion occurs in a single battery cell of the module, flames or high-temperature gas emitted from the battery cell may propagate to other adjacent battery cells, causing a chain explosion.

A technique to prevent the chain explosion is required. For example, there is a potting technology that covers a positive electrode of the battery cell with foamed urethane or a silicone material. The potting material protects the battery cell from air and moisture at normal times, and in case of emergency such as thermal runaway, the vent gas and debris of the battery cell are smoothly discharged as the foamed air gap is opened, and transition of the escaped debris to the surrounding cells can be prevented, thereby preventing chain explosion.

However, potting is expensive and process management is difficult, causing an increase in the toll processing cost of the rechargeable battery module, and the potting material penetrates between a cap assembly in a cylindrical battery to block the open vent of the battery cell, thereby causing side effects such as a side explosion (side rupture).

### SUMMARY OF THE INVENTION

An embodiment is to provide a rechargeable battery module that prevents chain explosion of peripheral battery cells by limiting discharge of an electrode assembly when the battery cell explodes.

A rechargeable battery module according to an embodiment includes: a plurality of battery cells provided with a vent hole; a first holder that supports the battery cells by accommodating one of the sides of the battery cells; a second holder that supports the battery cells by accommodating the other of the sides of the battery cells and is coupled to the first holder; a first plate that is provided at one side of the second holder and includes an outlet formed at a position corresponding to a vent hole of each of the battery cells, and a hooking piece protrudes in a diameter direction of the outlet from an inner wall surface of the outlet; and a second plate that is provided at one side of the first plate to block an explosion pressure, flames, and debris discharged through the vent hole and the outlet.

The battery cells may be formed as a cylindrical rechargeable battery.

The hooking piece may be protruded in plurality at a distance from each other in the diameter direction of the outlet from the inner wall surface of the outlet.

The plurality of hooking pieces may be formed of an elastic material that limits the discharge of an electrode assembly when the battery cell explodes.

The plurality of hooking pieces may be protruded obliquely from the inner wall surface of the outlet to the battery cell direction.

The hooking piece may be protruded at an angle range of 29 degrees to 31 degrees in the battery cell direction based on a surface of a first plate on the inner wall surface of the outlet.

The plurality of hooking pieces may limit the discharge of the electrode assembly when the battery cell explodes, and may be formed of an elastic material that is deformed in an upper direction of the outlet by a discharge pressure of the electrode assembly.

The hooking piece may be protruded with a length of 1/3 to 1/4 with respect to the diameter of the outlet.

In the hooking piece, a first width connected to the inner wall surface of the outlet and a second width of an end protruded into the outlet may be different from each other.

A friction protrusion may be protruded on a surface of the hooking piece, facing the battery cell.

The friction protrusions may protrude at least one on each surface of the plurality of hooking pieces.

A distance between the battery cell and the hooking piece may be in a range from 9 mm to 10 mm.

At least some of the above and other features of the invention are set out in the claims.

According to the embodiment, when a part of a plurality of battery cells explodes abnormally, it is possible to effectively prevent the electrode assembly from being discharged to the outside from the exploded battery cell, and secondary explosion can be prevented from occurring in adjacent battery cells, thereby improving stability.

### BRIEF DESCRIPTION OF THE DRAWINGS

FIG. 1 is a schematic exploded perspective view of a rechargeable battery module according to a first embodiment of the present disclosure.
FIG. 2 is a cross-sectional view of FIG. 1, taken along the line II-II.
FIG. 3 is a cross-sectional perspective view of a cylindrical battery cell applied to FIG. 1.
FIG. 4 is a perspective view of a main part schematically showing a state in which the hooking piece is formed in the outlet formed on the first plate according to the first embodiment of the present disclosure.
FIG. 5 is a top plan view of the main part schematically showing a state in which the hooking piece is formed on the outlet formed on the first plate in FIG. 1.
FIG. 6 is a cross-sectional view that schematically illustrates main parts of a rechargeable battery module according to a second embodiment of the present disclosure.
FIG. 7 is a perspective view that schematically illustrates a state in which a hooking piece is formed in an outlet of a first plate according to the second embodiment of the present disclosure.
FIG. 8 is a cut-out view of FIG. 7, taken along the line VIII-VIII, and schematically illustrates a main part in a discharge state of the electrode assembly of the battery cell by partially incising the state where the hooking piece is formed in the outlet of the first plate.
FIG. 9 is a main part view that schematically illustrates a state of elastic deformation of a hooking piece when an electrode assembly is discharged in a battery cell according to the second embodiment of the present disclosure.
FIG. 10 schematically illustrates a state in which friction protrusions are formed on a hooking piece formed on a first plate according to a third embodiment of the present disclosure.

### DETAILED DESCRIPTION OF THE EMBODIMENTS

The present disclosure will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

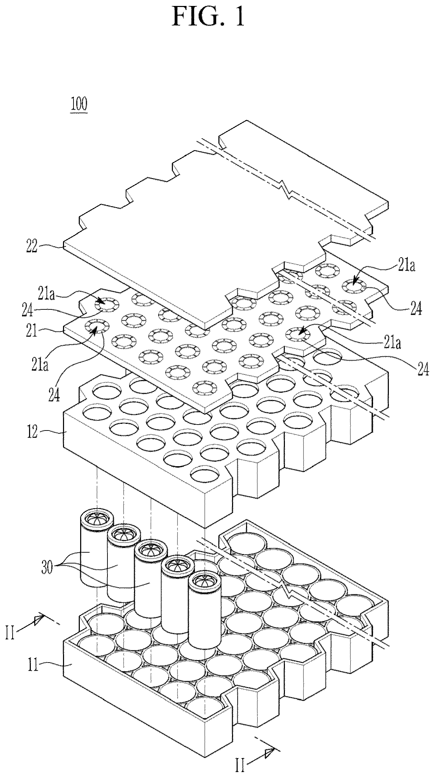

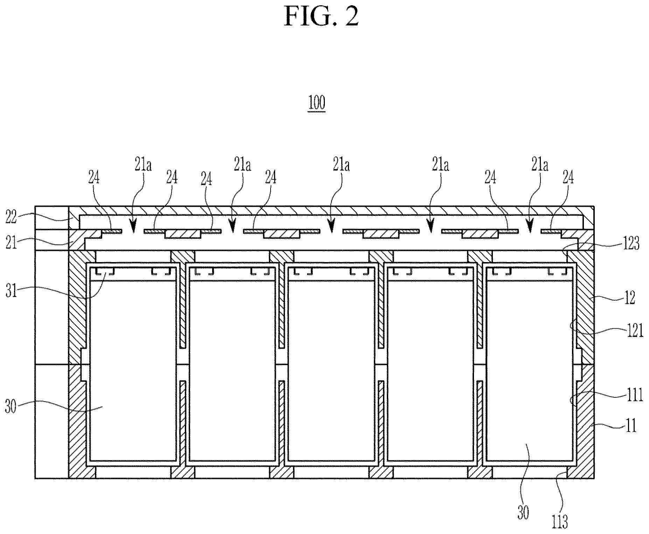

FIG. 1 is a schematic exploded perspective view of a rechargeable battery according to a first embodiment of the present disclosure, and FIG. 2 is a cross-sectional view of FIG. 1, taken along the line II-II.

As shown in FIG. 1 and FIG. 2, a rechargeable battery module 100 according to a first embodiment of the present disclosure includes a plurality of battery cells 30 provided with a vent hole 31, a first holder 11 supporting the battery cells 30 by accommodating one of the sides of the battery cells 30, a second holder 12 supporting the battery cells 30 by accommodating the other of the sides (ends) of the battery cells 30 and coupled to the first holder 11, a first plate 21 provided at one side of the second holder 12 and including an outlet 21a provided at a position corresponding to a vent hole of each of the battery cells 30 and a hooking piece 24 protruded in a diameter direction of the outlet 21a from an inner wall surface of the outlet 21a, and a second plate 22 disposed at one side of the first plate 21 and blocking the explosion pressure, flame, and debris discharged through the vent hole 31 and the outlet 21a.

As an embodiment, the battery cell 30 may be formed as a cylindrical rechargeable battery having a vent hole 31.

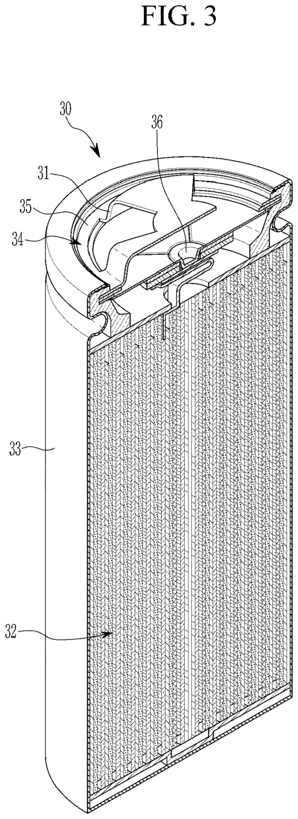

FIG. 3 is a cross-sectional perspective view of a cylindrical battery cell applied to FIG. 1.

As shown in FIG. 3, a cylindrical battery cell 30 may include an electrode assembly 32 performing charging and discharging, a case 33 embedding the electrode assembly 32, and a cap assembly 34 electrically connected to the electrode assembly 32 and coupled to an opening of the case 33 in an insulating state.

A cap plate 35 forming the cap assembly 34 has a vent hole 31, and vent gas, explosion pressure, flame, and debris may be discharged through the vent hole 31 when a vent 36 is cut.

Meanwhile, referring back to FIG. 1 and FIG. 2, the first holder 11 may form a plurality of first accommodating portions that support the battery cells 30 by accommodating lower portions of the battery cells 30.

In addition, the second holder 12 may form a plurality of second accommodating portions 121 that support the battery cells 30 by accommodating upper portions of the battery cells 30. The second holder 12 may be coupled to the first holder 11 to accommodate the battery cells 30 in the first and second accommodating portions 111 and 121.

For example, the first holder 11 may include a first protrusion 113 to support the lower portion of one side of the battery cell 30, and the second holder 12 may include a second protrusion 123 to support the upper portion of the other side of the battery cell 30. The first and second protrusions 113 and 123 may prevent the battery cell 30 from escaping in the vertical direction in the drawing in the first and second holders 11 and 12.

The first plate 21 may be provided on an upper portion of one side of the second holder 12 and a plurality of outlets 21a may be formed at positions corresponding to the vent holes 31 of the respective battery cells 30. A plurality of hooking pieces 24 may be protruded on an inner wall surface of the outlet 21a. The action and configuration of the hooking piece 24 will be described below,

The first plate 21 is installed on the upper side of the plurality of battery cells 30 in a state in which they are inserted and fixed into the first holder 11 and the second holder 12, and thus, when a part of the battery cell 30 explodes, the gas inflow due to the explosion occurring in the direction of the adjacent battery cell 30 can be blocked.

In addition, the second plate 22 is disposed on one side of the first plate 21 and installed to block vent gas, explosion pressure, flame, and debris discharged through the vent hole 31 and the outlet 21a.

Meanwhile, the hooking piece 24 is protruded to the outlet 21a of the first plate 21.

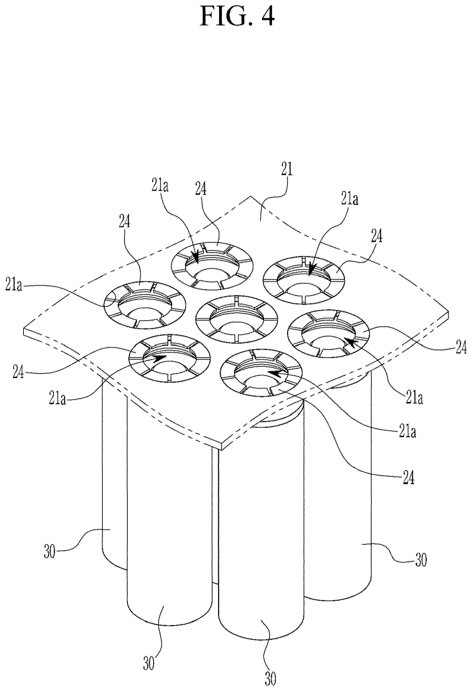

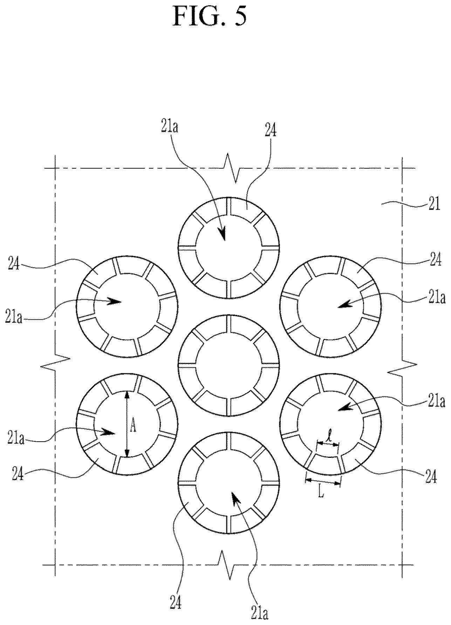

FIG. 4 is a perspective view of a main part schematically showing a state in which the hooking piece is formed in the outlet formed on the first plate according to the first embodiment of the present disclosure, and FIG. 5 is a top plan view of the main part schematically showing a state in which the hooking piece is formed on the outlet formed on the first plate in FIG. 1.

As shown in FIG. 4 and FIG. 5, the hooking piece 24 may be protruded in the diameter direction of the outlet 21a from the upper inner wall surface of the outlet 21a formed on the first plate 21. As described, the hooking piece 24 is formed at the outlet 21a to prevent an electrode assembly from escaping to the outside when the battery cell 30 explodes. This will be described in detail below.

The hooking pieces 24 may be protruded in plurality from the inner wall surface of the outlet 21a in the diameter direction of the outlet 21a. It is illustratively described that eight hooking pieces 24 according to the present embodiment protrude radially on the inner wall surface of outlet 21a. However, it is not necessarily limited that the eight hooking pieces 24 are protruded on the inner wall surface of the outlet 21a, and it is desirable to change the diameter of the outlet 21a or to appropriately change the number of hooking pieces 24 in a range of 6 to 8 protruded in response to the discharge pressure of the electrode assembly.

Here, on the basis of the diameter of 12 mm of the opening of the outlet 21a (refer to A in FIG. 5), eight hooking pieces 24 may be protruded on the inner wall surface of the outlet 21a. When the diameter of the opening of the outlet 21a is changed, the number of protruded hooking pieces 24 may also be changed.

The hooking piece 24 is protruded in multiple radial directions along the inner wall surface of the outlet 21a, and may be formed of a metal material with elastic force to stably support the external escape of the electrode assembly discharged from the battery cell 30 in the event of an explosion or similar situation.

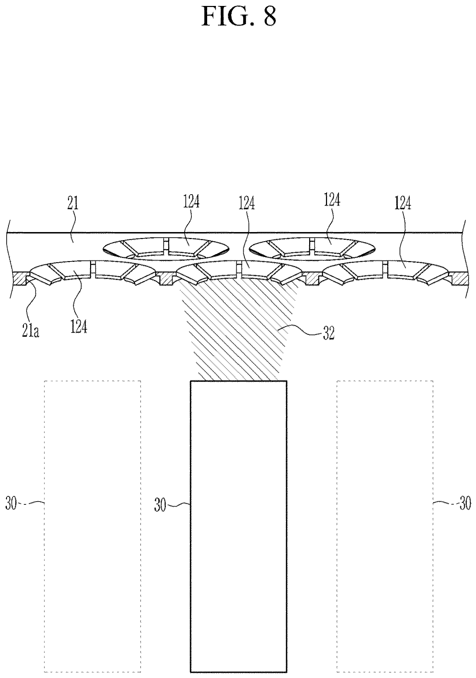

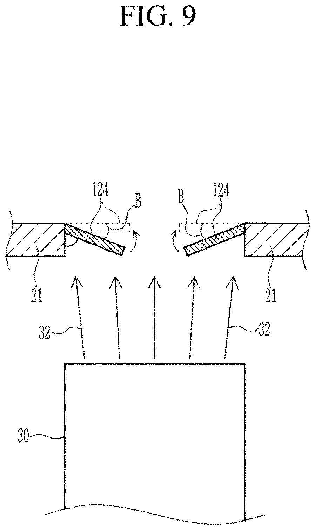

Accordingly, when a part of the plurality of battery cells 30 explodes and an electrode assembly 32 (refer to FIG. 8 and FIG. 9) is discharged in the direction of the outlet 21a from inside the battery cell 30, the hooking piece 24 may interfere with the electrode assembly inside the outlet 21a to limit the external discharge of the electrode assembly.

That is, since the hooking piece 24 is protruded in the diameter direction of the outlet 21a from the inner wall surface of the upper edge position of the outlet 21a, the outlet 21a may be able to perform a reducing action of an opening diameter of the outlet 21a, and thus the electrode assembly 32 moved through the outlet 21a can be prevented from escaping to the outside.

For this, the hooking piece 24 may be protruded on the inner wall surface of the outlet 21a in a trapezoid shape in which a first width L connected to the inner wall surface of the outlet 21a and a second width I of an end protruded into the outlet 21a are different from each other.

Accordingly, the hooking piece 24 prevents the electrode assembly 32 from escaping to the outside of the first plate 21 due to interference with the electrode assembly 32 such that a secondary damage, which may occur when electrode assembly discharged by the explosion contacts the adjacent battery cell 30, can be prevented.

The hooking piece 24 may be protruded on the inner wall surface of the outlet 21a with a length of 1/3 to 1/4 of the diameter of the outlet 21a to sufficiently limit the occurrence of the electrode assembly 32 moving through the outlet 21a.

In addition, a distance between the battery cell 30 and the hooking piece 24 is spaced in a range of 9 mm to 10 mm, and may be spaced apart from each other more preferably by 10 mm. Accordingly, the electrode assembly discharged from the battery cell 30 can be stably hooked and supported through the hooking piece 24.

Accordingly, when the battery cell 30 explodes, the gas can be smoothly discharged through the outlet 21a and the electrode assembly 32 is prevented from escaping to the outside of the first plate 21 by the hooking piece 24, thereby enhancing the stability of the rechargeable battery module 100.

As described above, stability of the rechargeable battery module 100 according to the present embodiment can be improved by effectively preventing the electrode assembly 32 from being discharged externally when some of the plurality of battery cells 30 explode, and preventing secondary explosions of the battery cells 30.

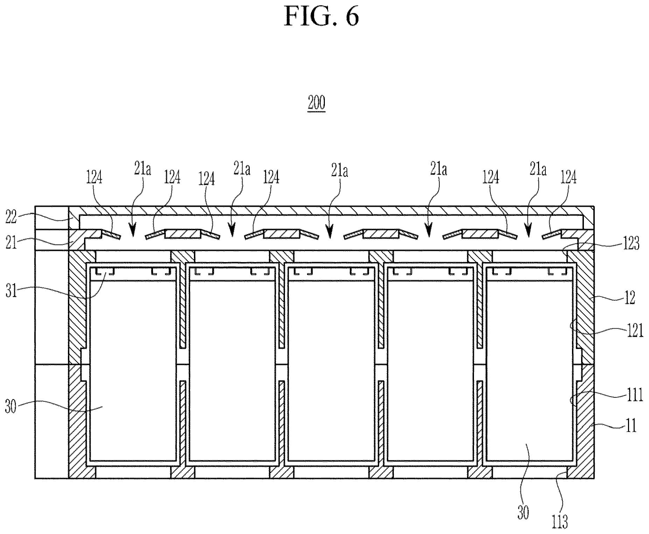

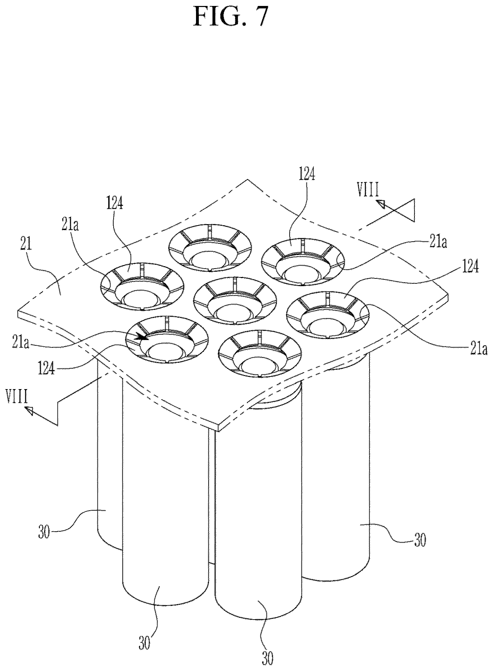

FIG. 6 is a cross-sectional view that schematically illustrates a main part of a rechargeable battery module according to a second embodiment of the present disclosure, FIG. 7 is a perspective view that schematically illustrates a state in which a hooking piece is formed in an outlet of a first plate according to the second embodiment of the present disclosure, FIG. 8 is a cut-out view of FIG. 7, taken along the line VIII-VIII, and schematically illustrates a main part in a discharge state of the electrode assembly of the battery cell by partially incising the state where the hooking piece is formed in the outlet of the first plate, and FIG. 9 is a main part view that schematically illustrates a state of elastic deformation of a hooking piece when an electrode assembly is discharged in a battery cell according to the second embodiment of the present disclosure. Hereinafter, the same reference number as FIG. 1 to FIG. 5 indicates the same or similar member of the same or similar function. Hereinafter, detailed descriptions of the same reference numerals are omitted.

As shown in FIG. 7 to FIG. 9, a plurality of hooking pieces 124 of a rechargeable battery module 200 according to a second embodiment of the present disclosure may be protruded obliquely in a direction of a battery cell 30 from an inner wall surface of an outlet 21a.

As described, since the plurality of hooking pieces 124 are obliquely protruded in the direction of the battery cell 30 from the inner wall surface of the outlet 21a, when an electrode assembly 32 discharged upon explosion of the battery cell 30 contacts the hooking piece 124, the hooking piece 124 may be elastically deformed in an upper direction of the outlet 21a.

Here, the hooking piece 124 may be protruded at an angle range of 29 degrees to 31 degrees in the battery cell direction based on a surface of a first plate 21 from the inner wall surface of the outlet 21a. More preferably, the hooking piece 124 may be protruded at an angle of 30 degrees (refer to B in FIG. 9) in the direction of the battery cell 30 based on the surface of the first plate 21 to properly elastically support the discharge pressure of the battery cell 30.

Therefore, the elasticity-deformed plurality of battery cells 30 may reduce an opening diameter of the outlet 21a thereby effectively limiting the discharge of the electrode assembly 32 to the outside through the outlet 21a.

In addition, the hooking piece 124 may buffer the discharge pressure in the process of discharging the electrode assembly 32 in the event of an abnormal explosion of the battery cell 30, and thus it is possible to prevent the electrode assembly 32 from being discharged in the direction of the adjacent battery cell 30.

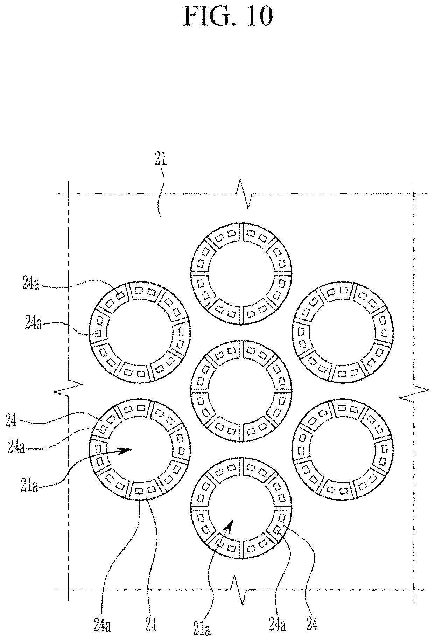

FIG. 10 schematically illustrates a state in which friction protrusions are formed on a hooking piece formed on a first plate according to a third embodiment of the present disclosure. Hereinafter, the same reference number in FIG. 1 to FIG. 9 indicates the same or similar member of the same or similar function. Hereinafter, detailed descriptions of the same reference numerals are omitted.

As shown in FIG. 10, a friction protrusion 24a may be formed on a surface that faces a battery cell 30 in a plurality of hooking pieces 24 according to a third embodiment of the present disclosure.

Therefore, the friction protrusion 24a increases a contact area of an electrode assembly with the hooking piece 24 inside an outlet 21a such that the interference between the electrode assembly and the hooking piece 24 is maximized thereby effectively limiting the external discharge of the electrode assembly.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

**<Description of symbols>**

| | | | |
|---|---|---|---|
| 11 | first holder | 12 | second holder |
| 21 | first plate | 21a | outlet |
| 22 | second plate | 24, 124 | hooking piece |
| 24a | friction protrusion | 30 | battery cell |
| 32 | electrode assembly | 33 | case |
| 34 | cap assembly | | |

## Claims

1. A rechargeable battery module comprising:
a plurality of battery cells provided with a vent hole;
a first holder that supports the battery cells by accommodating one of the sides of the battery cells;
a second holder that supports the battery cells by accommodating the other of the sides of the battery cells and is coupled to the first holder;
a first plate that is provided at one side of the second holder and includes an outlet formed at a position corresponding to a vent hole of each of the battery cells, and a hooking piece protrudes in a diameter direction of the outlet from an inner wall surface of the outlet; and
a second plate that is provided at one side of the first plate and configured to block an explosion pressure, flames, and debris discharged through the vent hole and the outlet.

2. The rechargeable battery module of claim 1, wherein:
the battery cells is formed as a cylindrical rechargeable battery.

3. The rechargeable battery module of claim 1 or claim 2, wherein:
the rechargeable battery module includes a plurality of hooking pieces that each protrude at a distance from each other in the diameter direction of the outlet from the inner wall surface of the outlet.

4. The rechargeable battery module of claim 3, wherein:
the plurality of hooking pieces are formed of an elastic material that limits the discharge of an electrode assembly when the battery cell explodes.

5. The rechargeable battery module of claim 1, wherein:
the rechargeable battery module includes a plurality of hooking pieces that each protrude obliquely from the inner wall surface of the outlet to the battery cell direction.

6. The rechargeable battery module of claim 5, wherein:
each of the plurality of hooking pieces is protruded at an angle range of 29 degrees to 31 degrees in the battery cell direction based on a surface of a first plate on the inner wall surface of the outlet.

7. The rechargeable battery module of claim 5 or claim 6, wherein:
the plurality of hooking pieces limit the discharge of the electrode assembly when the battery cell explodes, and are formed of an elastic material that is configured to deform in an upper direction of the outlet by a discharge pressure of the electrode assembly.

8. The rechargeable battery module of any one of claims 1 to 7, wherein:
the hooking piece is protruded with a length of 1/3 to 1/4 with respect to the diameter of the outlet.

9. The rechargeable battery module of any one of claims 1 to 8, wherein:
in the hooking piece, a first width connected to the inner wall surface of the outlet and a second width of an end protruded into the outlet are different from each other.

10. The rechargeable battery module of any one of claims 1 to 9, wherein:
a friction protrusion is protruded on a surface of the hooking piece, facing the battery cell.

11. The rechargeable battery module of claim 10, wherein:
the friction protrusions protrude at least one on each surface of the plurality of hooking pieces.

12. The rechargeable battery module of any one of claims 1 to 11, wherein:
a distance between the battery cell and the hooking piece is in a range from 9 mm to 10 mm.
